# FASCICULE DE BREVET EUROPEEN

(11) **EP 3 004 443 B1**
(45) Date de publication et mention de la délivrance du brevet: **20.12.2017**
(21) Numéro de dépôt: 14731710.1
(22) Date de dépôt: 22.05.2014
(51) Int. Cl.: D04H 1/4209

(54) **DISPOSITIF POUR LA FABRICATION D'UN PRODUIT FIBREUX**
VORRICHTUNG ZUR HERSTELLUNG EINES FASERPRODUKTS
DEVICE FOR PRODUCING A FIBROUS PRODUCT

(30) Priorité: 24.05.2013 FR 1354728
(43) Date de publication de la demande: 13.04.2016
(73) Titulaire: Saint-Gobain Isover, 92400 Courbevoie (FR)
(72) Inventeur: ZACHI DE OSTI, Fernando, décédé (FR); BAUDOUIN, Bernard, F-60650 Saint Paul (FR)
(74) Mandataire: Saint-Gobain Recherche
(86) Numéro de dépôt international: PCT/FR2014/051208
(87) Numéro de publication internationale: WO 2014/188135

(56) Documents cités:
- US-A1- 2004 191 350

## Description

La présente invention a trait à un dispositif de formage pour créer une forme dans un produit fibreux, ce dispositif de formage étant destiné à équiper une palette de convoyeur pour le transport du produit fibreux à travers un dispositif de chauffage. L'invention a également trait à un dispositif de fabrication d'un produit fibreux comprenant un tel dispositif de formage.

Un produit d'isolation fibreux, par exemple un panneau d'isolation pour conduit de distribution d'air, est classiquement constitué d'un matelas de fibres minérales, telles que des fibres de verre, qui sont liées entre elles par un liant organique. La fabrication de tels panneaux fibreux comprend tout d'abord le fibrage et le dépôt de fibres sur un convoyeur ou transporteur mobile perforé. L'amas de fibres est plaqué sur le convoyeur à l'aide de caissons d'aspiration agencés sous le convoyeur. Lors du fibrage, un liant est pulvérisé à l'état de solution ou suspension dans un liquide volatil tel que l'eau sur les fibres étirées, ce liant ayant des propriétés d'adhésivité activables par la chaleur. Le liant comprend usuellement une matière durcissable à chaud, telle qu'une résine thermodurcissable, par exemple une résine phénol/formaldéhyde.

La couche primaire de fibres relativement lâches sur le convoyeur collecteur est ensuite transférée à un dispositif de chauffage, par exemple une étuve de réticulation ou un dispositif de chauffage par micro-ondes. Le matelas de fibres traverse le dispositif de chauffage grâce à des convoyeurs perforés supplémentaires. De manière classique, deux convoyeurs sont disposés en regard l'un de l'autre, en étant espacés d'une distance ajustée pour déterminer l'épaisseur du panneau fibreux. Chaque brin des convoyeurs comprend une pluralité de palettes constituées de grilles articulées entre elles et perforées pour être perméables à l'air et aux autres gaz issus du chauffage du matelas. Le panneau fibreux présente ainsi une densité plus ou moins importante en fonction du degré de la compression exercée par les deux convoyeurs dans le dispositif de chauffage.

Pendant son passage dans le dispositif de chauffage, le matelas est asséché et soumis à un traitement thermique spécifique qui provoque le durcissement du liant présent à la surface des fibres. Ce durcissement entraîne également la réticulation des fibres les unes aux autres selon une structure tridimensionnelle, c'est-à-dire une liaison via le liant thermodurci aux points de contact entre les fibres, et ainsi la stabilisation du matelas à l'épaisseur désirée pour le panneau fibreux, tout en maintenant une élasticité.

En variante, le matelas de fibres avant chauffage peut être dépourvu de liant. La mise en forme et la stabilisation du panneau fibreux peuvent alors résulter d'une simple agglomération des fibres par application d'une pression et d'une température élevées sur le matelas de fibres. Dans ce cas, le dispositif de chauffage est généralement une presse de formage chauffante.

Pour l'assemblage de panneaux fibreux qui sont juxtaposés bord à bord, ou pour le repliement jointif d'un panneau fibreux sur lui-même, par exemple de manière à former une gaine, il est par ailleurs connu de former des feuillures sur les bords des panneaux. Chaque feuillure d'un panneau est destinée à coopérer par emboîtement avec une feuillure complémentaire, soit d'un panneau adjacent dans le cas de panneaux juxtaposés, soit du même panneau dans le cas d'un panneau replié sur lui-même. Un procédé classique de formation des feuillures met en jeu des blocs de formage, ou "shiplap shoes", qui sont fixés dans le dispositif de chauffage sur des bords opposés des deux convoyeurs en regard, de manière à assurer une compression des bords longitudinaux du panneau fibreux. Ainsi, les bords longitudinaux du panneau fibreux sont portés à une densité supérieure par rapport au reste du panneau, ce qui forme les feuillures.

Il est souvent souhaitable d'utiliser un même dispositif de chauffage pour fabriquer des panneaux fibreux avec et sans feuillures, ou encore des panneaux fibreux présentant des feuillures de différentes tailles. Toutefois, les blocs de formage sont parfois soudés de manière permanente sur les palettes des convoyeurs. En variante, les blocs de formage peuvent être boulonnés sur les palettes des convoyeurs. Ils doivent alors être démontés et remplacés à chaque changement de type de feuillure. Or, le montage et le démontage de tels blocs de formage boulonnés est long et fastidieux. En particulier, le vissage et le dévissage doivent être réalisés en faisant marcher le convoyeur à faible vitesse, avec une partie du corps de l'opérateur qui entre dans le dispositif de chauffage, ce qui ne peut avoir lieu que lorsque le dispositif de chauffage est froid. De plus, la présence des vis et des dispositifs de positionnement réduit considérablement la surface de passage de l'air de convection, ce qui conduit à une mauvaise cuisson des bords des panneaux.

Par ailleurs, US 2004/0191350 A1 décrit un dispositif de fixation amovible de blocs de formage sur les palettes d'un convoyeur d'étuve, qui met en jeu des organes de rétention associés à des billes de verrouillage. Chaque organe de rétention peut passer entre une configuration verrouillée, dans laquelle les billes de verrouillage font saillie par rapport à l'organe de rétention et l'immobilisent par rapport à une collerette du bloc de formage, et une position déverrouillée, dans laquelle les billes de verrouillage sont en retrait dans le volume interne de l'organe de rétention de manière à permettre sa libération par rapport à la collerette du bloc de formage. En pratique, le passage entre les configurations verrouillée et déverrouillée de l'organe de rétention est activé à l'aide de cames qui sont déplacées parallèlement au convoyeur, ce qui permet le montage et le démontage du bloc de formage. Ce dispositif de fixation à billes de verrouillage est complexe et coûteux. De plus, il y a un risque d'encrassement du mécanisme à billes au cours du temps, ce qui limite la fiabilité du système de fixation sur le long terme. Par ailleurs, la nécessité d'utiliser des cames bien spécifiques pour passer entre les configurations verrouillée et déverrouillée complique le montage et le démontage du bloc de formage, tout en augmentant le coût du dispositif. On note également que les cames sont déplacées à l'arrière des palettes du convoyeur, à l'emplacement où sont habituellement prévus des moyens d'étanchéité de l'étuve, en particulier sous la forme de joints brosses. L'utilisation des cames est donc pénalisante car elle génère des fuites d'air chaud.

C'est à ces inconvénients qu'entend plus particulièrement remédier l'invention en proposant un dispositif de formage dont le montage et le démontage par rapport à un convoyeur d'un dispositif de chauffage, notamment un convoyeur d'étuve, peuvent être réalisés de manière aisée et rapide, y compris lorsque le convoyeur est encore chaud, sans générer de risque pour l'opérateur, ce dispositif garantissant un maintien en place fiable et durable sur le convoyeur, la structure de ce dispositif étant en outre simple et permettant d'équiper tout type de convoyeur à moindre coût.

A cet effet, l'invention a pour objet un dispositif de formage pour créer une forme dans un produit fibreux, ce dispositif de formage étant destiné à être monté sur une palette d'un convoyeur de transport du produit fibreux à travers un dispositif de chauffage, la palette définissant une surface de réception du produit fibreux et le dispositif de formage comportant :
- un bloc de formage, dont une partie principale est destinée à être agencée à l'avant de la surface de réception, et
- au moins un élément d'ancrage, qui est destiné à être fixé sur la palette en étant agencé à l'arrière de la surface de réception,
   caractérisé en ce que le bloc de formage et l'élément d'ancrage comprennent des organes d'encliquetage complémentaires qui, lorsque la partie principale du bloc de formage est en regard de la surface de réception et l'élément d'ancrage est fixé sur la palette à l'arrière de la surface de réception, sont aptes à venir en prise par l'application d'un effort unidirectionnel de poussée de la partie principale du bloc de formage vers la surface de réception, selon une direction transversale à la surface de réception.

Dans le cadre de l'invention, les termes "avant" et "arrière" sont utilisés pour définir une position par rapport à la surface de réception de produit fibreux définie par la palette. Au sens de l'invention, des éléments sont agencés à l'avant de la surface de réception lorsqu'ils sont compris dans le demi-espace qui fait face à, ou qui est en regard de, la surface de réception, tandis que des éléments sont agencés à l'arrière de la surface de réception lorsqu'ils sont compris dans l'autre demi-espace.

Grâce à l'invention, une fois que la palette de convoyeur a été équipée de l'élément d'ancrage, il est possible de monter le bloc de formage de manière directe, en positionnant la partie principale du bloc de formage en regard de la surface de réception et en appliquant un effort unidirectionnel de poussée de la partie principale du bloc de formage vers la surface de réception, selon une direction transversale à la surface de réception. Le montage du bloc de formage sur la palette est ainsi aisé et rapide.

De préférence, les organes d'encliquetage sont dimensionnés de telle sorte que leur venue en prise peut être actionnée par la force humaine, éventuellement assistée d'un outil manuel tel qu'un maillet, mais sans nécessiter d'apport d'énergie électrique.

Selon une caractéristique avantageuse, la palette définit un volume intérieur à l'arrière de la surface de réception et l'élément d'ancrage est adapté pour être logé dans ce volume intérieur sans dépasser à l'arrière du volume intérieur. Un tel élément d'ancrage logé, ou "noyé", dans le volume de la palette a l'avantage de ne pas perturber le passage de l'air dans le dispositif de chauffage, ce qui favorise une cuisson optimale du produit fibreux. De plus, comme l'élément d'ancrage est situé sous la surface de réception de la palette, il est protégé des résidus de cuisson des produits fibreux, ce qui permet d'éviter des collages indésirables.

Selon une autre caractéristique avantageuse, les organes d'encliquetage, lorsqu'ils sont en prise, assurent un maintien élastique du bloc de formage par rapport à l'élément d'ancrage. On entend ici par "maintien élastique" le fait que les organes d'encliquetage sont aptes à absorber élastiquement au moins une partie des efforts susceptibles de les solliciter lors du fonctionnement du convoyeur. En particulier, les organes d'encliquetage sont aptes à rester en prise à l'encontre d'efforts qui tendent à les désassembler, tels que les efforts résultant des vibrations inhérentes au fonctionnement du convoyeur.

De préférence, au moins l'un des organes d'encliquetage est formé par une lame-ressort, qui contribue au maintien élastique du bloc de formage par rapport à l'élément d'ancrage. Cette lame-ressort est avantageusement constituée en un alliage métallique pour lequel la variation de la limite élastique est inférieure à 30% en relatif, de préférence inférieure à 20% en relatif, dans le domaine de températures allant de 20°C à 300°C. Ainsi, la lame-ressort remplit sa fonction d'absorption des efforts même à haute température, et en particulier sur toute la gamme de températures susceptibles d'être appliquées dans le dispositif de chauffage. A titre d'exemple, la lame-ressort peut être constituée en un acier de composition adaptée, ou encore en un superalliage à base de nickel et de chrome.

Selon un aspect de l'invention, l'organe d'encliquetage de l'élément d'ancrage comporte une surface d'entrée qui forme un point dur pour la mise en prise des organes d'encliquetage, cette surface d'entrée étant inclinée par rapport à la direction de l'effort de poussée selon un angle inférieur ou égal à 45°, de préférence compris entre 10° et 30°, de manière à permettre le passage du point dur lors de l'application de l'effort de poussée. L'amplitude de l'effort de poussée à appliquer pour obtenir la mise en prise des organes d'encliquetage peut ainsi être ajustée en jouant sur l'inclinaison de la surface d'entrée, étant entendu que la mise en prise est d'autant plus difficile que l'angle d'inclinaison de la surface d'entrée par rapport à la direction de l'effort de poussée est élevé.

Selon un aspect de l'invention, les organes d'encliquetage sont aptes à être désassemblés par l'application d'un effort d'éloignement du bloc de formage par rapport à la surface de réception, selon une direction transversale à la surface de réception. Pour le maintien en prise des organes d'encliquetage, l'organe d'encliquetage de l'élément d'ancrage comporte une surface de rétention qui forme un point dur pour le désassemblage des organes d'encliquetage, cette surface de rétention étant inclinée par rapport à la direction de l'effort d'éloignement selon un angle sensiblement égal à 45°, de manière à permettre le passage du point dur lors de l'application de l'effort d'éloignement. L'angle d'inclinaison de la surface de rétention par rapport à la direction de l'effort d'éloignement reste inférieur à 45° en étant de préférence proche de 45°, sachant qu'un angle supérieur à 45° empêche le désassemblage des organes d'encliquetage, tandis qu'un angle trop inférieur à 45° n'assure pas un maintien en prise suffisant des organes d'encliquetage.

Selon une caractéristique avantageuse, le bloc de formage comporte au moins une ouverture qui, en configuration montée du dispositif de formage sur la palette, est située à l'avant de la surface de réception, les organes d'encliquetage étant aptes à être désassemblés par l'application, à travers l'ouverture latérale, d'un effort d'éloignement du bloc de formage par rapport à la surface de réception selon une direction transversale à la surface de réception. De préférence, le dispositif de formage est agencé au voisinage d'un bord latéral de la palette, avec l'ouverture latérale du bloc de formage orientée vers ce bord latéral. Il est ainsi possible de démonter le bloc de formage depuis l'extérieur du dispositif de chauffage, en faisant passer un outil approprié dans l'ouverture latérale du bloc de formage, qui est située à l'avant de la surface de réception de la palette, et en appliquant l'effort d'éloignement à l'aide de cet outil, de manière à désassembler les organes d'encliquetage. Le bloc de formage, une fois désolidarisé par rapport à la palette, est emmené par le convoyeur vers la sortie du dispositif de chauffage.

De manière avantageuse, le bloc de formage comprend au moins deux organes d'encliquetage en saillie par rapport à sa partie principale, qui sont aptes à venir en prise chacun avec un organe d'encliquetage de l'élément d'ancrage. Les deux organes d'encliquetage sont de préférence distants l'un de l'autre, de manière à assurer un maintien du bloc de formage sans rotation possible du bloc de formage par rapport à l'élément d'ancrage. Dans un mode de réalisation, le dispositif de formage comprend des moyens de blocage en rotation du bloc de formage par rapport à l'élément d'ancrage ou à la surface de réception, ce qui garantit un maintien en place fiable du bloc de formage sur la palette, même lorsque le produit fibreux en place sur le convoyeur exerce des efforts sur le bloc de formage.

De manière avantageuse, la partie principale du bloc de formage est perforée, de manière à ne pas perturber la circulation d'air dans le dispositif de chauffage.

L'invention a également pour objet un dispositif de fabrication d'un produit fibreux, comprenant :
- un dispositif de chauffage,
- un convoyeur inférieur et un convoyeur supérieur qui circulent dans le dispositif de chauffage, chaque convoyeur comprenant une pluralité de palettes définissant chacune une surface de réception du produit fibreux, les convoyeurs inférieur et supérieur étant agencés de manière à comprimer le produit fibreux entre les surfaces de réception lorsqu'ils transportent le produit fibreux à travers le dispositif de chauffage,
   ce dispositif étant tel qu'au moins l'un des convoyeurs inférieur et supérieur comporte au moins une palette munie d'un dispositif de formage tel que décrit ci-dessus.

De préférence, le dispositif de formage est agencé au voisinage d'un bord latéral du convoyeur.

Dans un mode de réalisation, le convoyeur inférieur comporte des dispositifs de formage équipant les palettes sur un bord des deux convoyeurs en regard, tandis que le convoyeur supérieur comporte des dispositifs de formage équipant les palettes sur le bord opposé des deux convoyeurs en regard. Un tel agencement permet de former des feuillures opposées, l'une mâle et l'autre femelle, sur les deux bords latéraux du produit fibreux.

Les caractéristiques et avantages de l'invention apparaîtront dans la description qui va suivre de deux modes de réalisation d'un dispositif de formage et d'un dispositif de fabrication de produit fibreux selon l'invention, donnée uniquement à titre d'exemple et faite en se référant aux dessins annexés dans lesquels :
- la figure 1 est vue schématique en élévation d'un dispositif de fabrication de produit fibreux conforme à l'invention ;
- la figure 2 est une vue de dessus d'une palette de l'un des convoyeurs du dispositif de chauffage de la figure 1, cette palette étant équipée d'un dispositif de formage conforme à un premier mode de réalisation de l'invention ;
- la figure 3 est coupe selon la ligne III-III de la figure 2 ;
- la figure 4 est coupe analogue à la figure 3 mais en éclaté ;
- la figure 5 est une vue en perspective du bloc de formage du dispositif de formage des figures 2 à 4 ;
- la figure 6 est une vue en perspective selon un autre angle du bloc de formage du dispositif de formage des figures 2 à 4 ;
- la figure 7 est une vue en perspective d'une griffe de démontage du dispositif de formage des figures 2 à 4 ;
- la figure 8 est une coupe analogue à la figure 3 pour un deuxième mode de réalisation de l'invention ; et
- la figure 9 est coupe analogue à la figure 8 mais en éclaté.

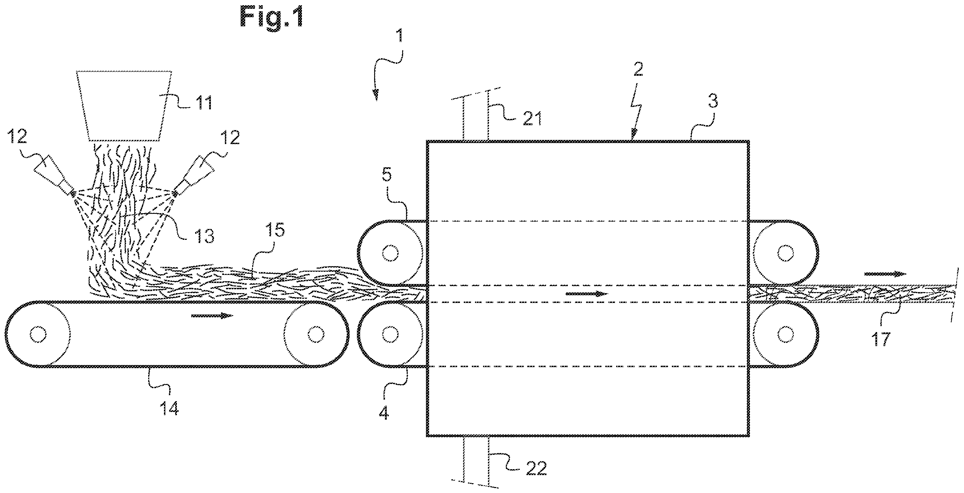

Sur la figure 1 est représenté schématiquement un dispositif 1 de fabrication de produit fibreux à base de laine de verre, par exemple pour la fabrication de panneaux d'isolation pour conduits de distribution d'air. Ce dispositif 1 comprend une unité de fibrage 11 à laquelle du verre fondu est amené, de manière usuelle, à partir d'un four et par l'intermédiaire d'un avant-corps (non représentés). Le dispositif 1 comprend des applicateurs 12 de liant prévus pour déposer, notamment par pulvérisation, un liant sur le voile de fibres 13 produit par l'unité de fibrage 11. Les fibres sont recueillies sur un convoyeur perforé 14, sous la forme d'un matelas 15 de fibres de laine de verre mélangées avec le liant. Le liant peut être une résine thermodurcissable, telle qu'une résine phénol/formaldéhyde, ou tout autre type de liant approprié.

Au bout du convoyeur 14, le dispositif 1 comprend une étuve de réticulation 2. Cette étuve 2 comporte une enceinte fermée 3, dans laquelle circulent un convoyeur inférieur 4 et un convoyeur supérieur 5 de transport et de calibrage du matelas 15. Chaque convoyeur 4 ou 5 comprend, de manière classique, une pluralité de palettes 6 articulées entre elles et perforées pour être perméables aux gaz. L'étuve 2 comporte un conduit d'alimentation 21 pour l'introduction des gaz chauds de cuisson du matelas, et un conduit d'échappement 22 pour l'évacuation des fumées résultant de la cuisson du matelas, en particulier de la vaporisation de l'eau contenue dans le matelas. Les convoyeurs 4 et 5 sont disposés en regard l'un de l'autre, en étant espacés d'une distance ajustée. Tout en permettant le passage des gaz chauds, ce qui favorise la prise rapide du liant, les convoyeurs 4 et 5 assurent une compression du matelas 15 pour lui donner l'épaisseur souhaitée du panneau fibreux 17 à la sortie de l'étuve 2. A titre d'exemple, pour un panneau roulé, l'épaisseur du panneau est classiquement comprise entre 10 et 450 mm, la densité de la couche de laine de verre étant par exemple comprise entre 5 et 150 kg/m³.

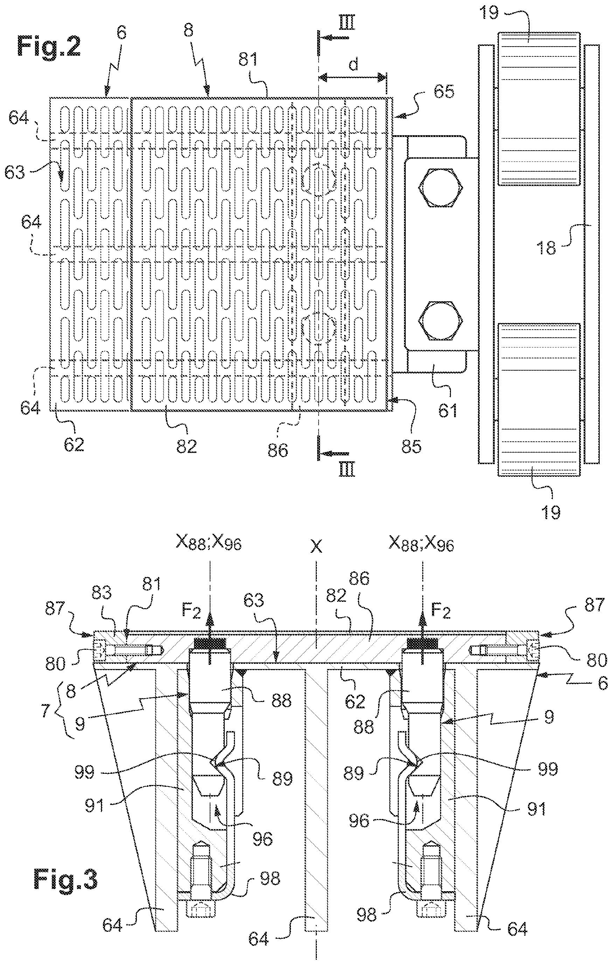

Les palettes 6 des convoyeurs 4 et 5 sont associées à des moyens de support, positionnés à l'intérieur de l'étuve 2, qui guident le déplacement des palettes. Pour chaque palette, les moyens de support comprennent par exemple un chariot 18 muni de roues 19 et relié à une languette latérale 61 de la palette, comme montré sur la figure 2. Les chariots 18 des différentes palettes sont destinés à circuler le long de rails (non représentés) et peuvent être déplacés à travers l'étuve 2 par tout moyen, notamment à l'aide d'une chaîne.

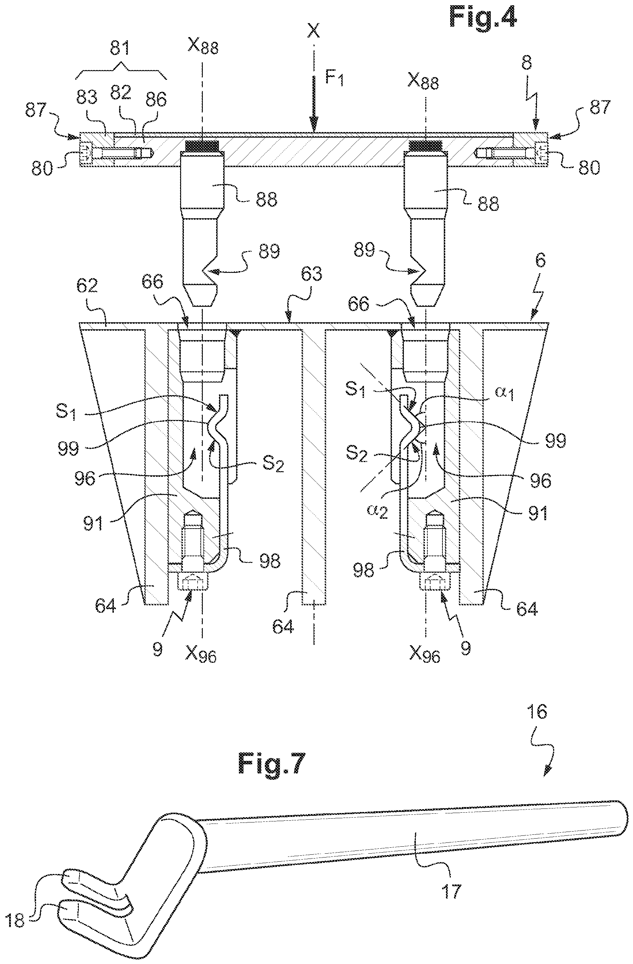

Le premier mode de réalisation met en jeu un premier modèle connu de palette de convoyeur, bien visible sur les figures 3 et 4. La palette 6 comporte une grille perforée 62 de forme rectangulaire, qui définit une surface 63 de réception du matelas. La languette 61 de liaison au chariot de support 18 est située au voisinage d'un bord latéral 65 de la grille 62. La grille 62 est reliée, à l'arrière de la surface de réception 63, à trois âmes 64 de forme allongée parallèles entre elles, à savoir une âme centrale et deux âmes latérales, qui sont toutes les trois de même hauteur perpendiculairement à la grille 62 et qui s'étendent sensiblement perpendiculairement au bord latéral 65. Le bord latéral 65 de la palette est destiné à être positionné en bordure du convoyeur, les âmes 64 étant alors agencées perpendiculairement à la direction de circulation du convoyeur.

Conformément à l'invention, la palette 6 est associée à un dispositif de formage 7, prévu pour être monté sur la palette au voisinage du bord latéral 65. Le dispositif de formage 7 comporte un bloc de formage 8, dont une partie principale 81 est destinée à être agencée à l'avant de la surface de réception 63, de manière à créer une forme dans le matelas 15 lors de son passage dans l'étuve. Le dispositif de formage 7 comporte également deux boîtiers d'ancrage 9 adaptés pour être fixés à l'arrière de la surface de réception 63 en étant logés intégralement dans le volume intérieur de la palette 6, qui est le volume délimité par les âmes 64 à l'arrière de la grille 62.

Les boîtiers d'ancrage 9 sont fixés au voisinage du bord latéral 65, à l'arrière de la surface de réception 63, chacun en appui contre une âme 64 latérale de la palette, par exemple par soudure avec cette âme latérale. Chaque boîtier 9 comporte un manchon 91 qui définit un logement 96 centré sur un axe X₉₆. Le logement 96 de chaque boîtier 9 est positionné en correspondance avec un orifice 66 de la grille 62 de la palette. Une lame-ressort 98 est solidarisée avec le manchon 91 de manière à former un bord du logement 96 le plus proche de l'âme 64 centrale. La lame-ressort 98 est constituée en un acier de composition adaptée, pour lequel la variation de la limite élastique est inférieure à 30% en relatif dans le domaine de températures allant de 20°C à 300°C, de sorte que la lame-ressort conserve ses propriétés élastiques même aux hautes températures imposées dans l'étuve.

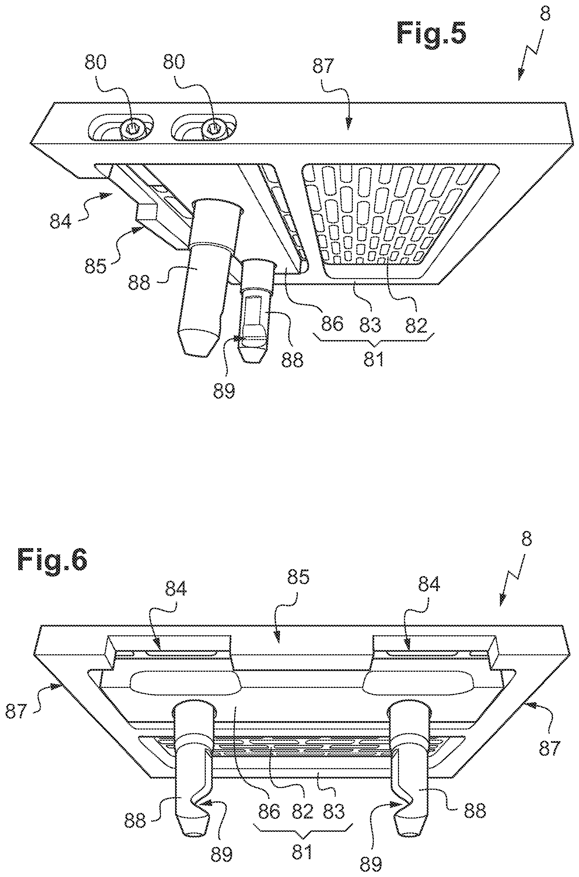

Comme bien visible sur les figures 5 et 6, la partie principale 81 du bloc de formage 8 comporte une base 83 de forme rectangulaire, qui porte une grille perforée 82 sur l'une de ses faces. Cette grille 82 est destinée à recevoir en appui le matelas 15. La dimension de la grille 82 parallèlement à un bord latéral 85 de la base 83 est sensiblement la même que la dimension de la grille 62 de la palette 6 parallèlement au bord latéral 65. Ainsi, la grille 82 du bloc de formage est apte à recouvrir la grille 62 au voisinage du bord latéral 65, en s'étendant sur toute la longueur du bord 65, comme montré sur la figure 2.

La base 83 comporte, à l'arrière de la grille 82 et au voisinage du bord latéral 85, une cavité dans laquelle est monté un support 86 portant deux broches 88. Chaque broche 88 est centrée sur un axe longitudinal X₈₈ et s'étend perpendiculairement au support 86, qui lui-même est parallèle au plan moyen de la base 83. Le support 86 comporte latéralement des vis 80 qui peuvent se déplacer dans lumières prévues dans les bords latéraux 87 de la base 83, où les bords 87 sont les bords perpendiculaires au bord 85. Ainsi, le support 86 est apte à être déplacé en coulissement selon une direction perpendiculaire au bord 85, de manière à ajuster la distance d entre les broches 88 et le bord latéral 85. En pratique, cela permet de moduler le positionnement de la partie principale 81 du bloc de formage 8 par rapport au bord latéral 65 de la palette, et ainsi de modifier la largeur de la forme créée dans le matelas 15, par exemple entre deux productions. Deux ouvertures 84, bien visibles sur la figure 6, sont ménagées dans le bord latéral 85, chacune sensiblement dans l'alignement d'une broche 88.

L'écartement entre les broches 88 du bloc de formage et l'écartement entre les logements 96 des boîtiers d'ancrage sont prévus égaux, de telle sorte que lorsque la partie principale 81 du bloc de formage est en regard de la surface de réception 63 de la palette 6, les axes X₈₈ des deux broches 88 peuvent être alignés avec les axes X₉₆ des deux logements 96 des boîtiers d'ancrage 9, comme montré sur la figure 4. Chaque broche 88 du bloc de formage est adaptée pour être reçue dans un logement 96 et pour coopérer par encliquetage avec la lame-ressort 98 correspondantes. A cet effet, chaque broche 88 comporte une encoche 89 qui est complémentaire d'un motif en relief 99 de la lame-ressort.

Lorsque la partie principale 81 du bloc de formage est en regard de la surface de réception 63 de la palette 6 dans la configuration de la figure 4, les encoches 89 des deux broches 88 sont aptes à être mises en prise avec les motifs 99 des logements 96 par l'application d'un effort unidirectionnel F₁ de poussée de la partie principale 81 du bloc de formage vers la surface de réception 63, selon une direction X transversale à la surface de réception, comme montré par la flèche F₁ de la figure 4.

L'effort de poussée F₁ provoque l'entrée de chaque broche 88 dans le logement 96 correspondant, jusqu'à la venue en prise du motif 99 dans l'encoche 89. Le motif 99 de chaque lame-ressort 98 comporte une surface d'entrée S₁, qui forme un point dur pour la mise en prise de l'encoche 89 et du motif 99. Cette surface d'entrée S₁ est inclinée par rapport à la direction X de l'effort F₁ selon un angle α₁ égal à 45°. Les organes d'encliquetage mâles 99 et femelles 89, et en particulier l'angle α₁, sont configurés pour que l'amplitude de l'effort de poussée F₁ corresponde à un effort applicable avec la force humaine, éventuellement avec l'aide d'un maillet, sans nécessiter d'outil électrique.

Lorsque les encoches 89 sont en prise avec les motifs 99, le bloc de formage 8 est monté de manière fiable et robuste sur la palette 6. De manière avantageuse, comme l'encliquetage met en jeu les motifs 99 formés par la lame-ressort 98, on obtient un maintien élastique du bloc de formage par rapport à la palette, qui résiste aux vibrations inhérentes au fonctionnement du convoyeur.

Une fois le bloc de formage 8 monté sur la palette, il est possible de le démonter simplement, par l'application d'un effort F₂ d'éloignement du bloc de formage par rapport à la surface de réception 63 selon la direction X transversale à la surface de réception, ce qui provoque le désassemblage des organes d'encliquetage 89 et 99. Le motif 99 de chaque lame-ressort 98 comporte une surface de rétention S₂, qui forme un point dur pour le désassemblage des organes d'encliquetage 89 et 99. Cette surface de rétention S₂ est inclinée par rapport à la direction X de l'effort d'éloignement F₂ selon un angle α₂ égal à 45°, comme visible sur la figure 4.

De manière avantageuse, l'effort d'éloignement F₂ du bloc de formage 8 par rapport à la surface de réception 63 peut être appliqué à travers les ouvertures 84 prévues dans le bord latéral 85 de la partie principale 81 du bloc de formage, à l'aide d'un outil approprié. Un exemple d'outil approprié est montré sur la figure 7. Il s'agit d'une griffe de démontage 16 comportant un manche allongé 17 et deux dents inclinées 18 formées à une extrémité du manche. Les dents 18 sont aptes à rentrer dans les ouvertures 84 du bloc de formage. Ainsi, il est possible, en insérant les dents 18 dans les ouvertures 84 et en agissant sur le manche 17, d'appliquer localement, dans l'alignement de chacune des deux broches 88, l'effort F₂ d'éloignement du bloc de formage 8 par rapport à la surface de réception 63, comme montré par les flèches F₂ de la figure 3.

A l'état monté du bloc de formage 8 sur la palette 6, les ouvertures 84 sont situées à l'avant de la surface de réception 63 et dirigées vers le bord du convoyeur. Un opérateur peut donc démonter le bloc de formage 8 depuis l'extérieur de l'étuve 2, alors que le convoyeur est en fonctionnement à vitesse réduite, en insérant les dents 18 de la griffe de démontage 16 dans les ouvertures latérales 84 du bloc de formage et en appliquant l'effort d'éloignement F₂ par action sur le manche 17, de manière à désassembler les organes d'encliquetage 89 et 99. Le bloc de formage 8, une fois désolidarisé par rapport à la palette 6, est emmené par le convoyeur vers la sortie de l'étuve.

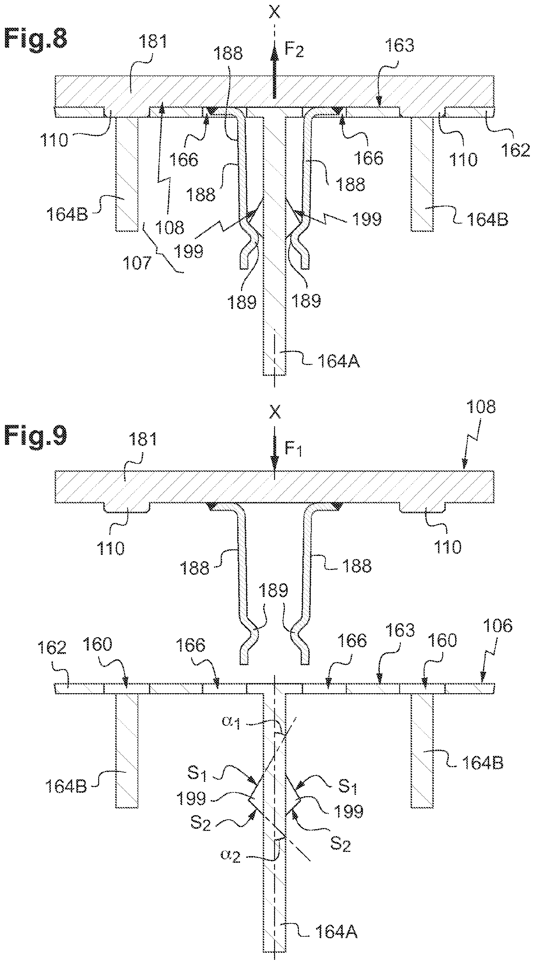

Dans le deuxième mode de réalisation représenté sur les figures 8 et 9, les éléments analogues à ceux du premier mode de réalisation portent des références identiques augmentées de 100. Ce deuxième mode de réalisation met en jeu un deuxième modèle connu de palette 106 de convoyeur, comportant toujours une grille perforée 162 de forme rectangulaire, qui définit une surface de réception 163 à l'arrière de laquelle s'étendent trois âmes 164A et 164B. Dans ce deuxième modèle de palette, l'âme centrale 164A présente une hauteur, prise perpendiculairement à la grille 162, plus grande que la hauteur des deux âmes latérales 164B.

Dans ce deuxième mode de réalisation, le dispositif de formage 107 comporte un bloc de formage 108 et des pions d'ancrage 199, où la forme des organes d'encliquetage a été adaptée au modèle de palette 106. En effet, l'âme centrale 164A de la palette a été mise à contribution pour porter deux pions d'ancrage 199, situés de part et d'autre de l'âme, tandis que la partie principale 181 du bloc de formage 108 porte deux lames-ressorts 188 propres coopérer par encliquetage avec les pions d'ancrage 199. A cet effet, chaque lame-ressort 188 comporte un motif en relief 189 qui est complémentaire d'un pion d'ancrage 199. Lorsque la partie principale 181 du bloc de formage est en regard de la surface de réception 163 de la palette 106 dans la configuration de la figure 9, les deux lames-ressorts 188 sont aptes à être insérées dans des orifices 166 prévus à cet effet dans la grille 162 de la palette, de manière à mettre en prise les motifs 189 des lames-ressorts avec les pions d'ancrage 199, par l'application d'un effort unidirectionnel F₁ de poussée de la partie principale 181 du bloc de formage vers la surface de réception 163, selon une direction X transversale à la surface de réception, comme montré par la flèche F₁ de la figure 9.

Chaque pion d'ancrage 199 comporte une surface d'entrée S₁ qui forme un point dur pour la mise en prise des organes d'encliquetage 189 et 199. Cette surface d'entrée S₁ est inclinée par rapport à la direction X de l'effort F₁ selon un angle α₁ égal à 30°, ce qui permet le passage du point dur lors de l'application de l'effort de poussée F₁. L'angle α₁ de 30° facilite la mise en prise des organes d'encliquetage par rapport à un angle de 45°. Ici encore, les organes d'encliquetage 189 et 199 sont configurés pour que l'amplitude de l'effort de poussée F₁ corresponde à un effort applicable avec la force humaine, éventuellement avec l'aide d'un maillet.

De manière avantageuse, les organes d'encliquetage sont localisés au voisinage de l'âme centrale 164A et logés dans le volume intérieur défini par la palette 106 à l'arrière de la surface de réception 163, ce qui permet de limiter l'impact sur la circulation d'air chaud dans l'étuve. Toutefois, dans ce mode de réalisation, du fait de la concentration des organes d'encliquetage au voisinage de l'âme centrale 164A, il existe un risque que le bloc de formage 108 soit entraîné en rotation lors du passage du matelas de fibres. Pour y remédier, la partie principale 181 du bloc de formage 108 comporte des ergots anti-rotation 110, destinés à être logés dans des creux 160 correspondants prévus sur la palette 106.

Comme dans le premier mode de réalisation, une fois le bloc de formage 108 monté sur la palette 106, il est possible de le démonter simplement, par l'application d'un effort F₂ d'éloignement du bloc de formage par rapport à la surface de réception 163 selon la direction X transversale à la surface de réception, comme montré par la flèche F₂ de la figure 8, de manière à provoquer le désassemblage des organes d'encliquetage 189 et 199. Chaque pion d'ancrage 199 comporte une surface de rétention S₂, qui forme un point dur pour le désassemblage des organes d'encliquetage. Cette surface de rétention S₂ est inclinée par rapport à la direction X de l'effort d'éloignement F₂ selon un angle α₂ égal à 45°. Comme précédemment, au moins une ouverture latérale, non visible sur les figures, est prévue sur le bloc de formage 108, afin de permettre à un opérateur d'appliquer l'effort d'éloignement F₂ à travers cette ouverture, à l'aide d'un outil approprié.

Comme il ressort des modes de réalisation décrits précédemment, le montage et le démontage d'un dispositif de formage conforme à l'invention sont particulièrement aisés et rapides.

En particulier, une fois que l'élément d'ancrage, par exemple sous la forme de boîtiers ou de pions d'ancrage, a été fixé sur la palette à l'arrière de la surface de réception, le montage du bloc de formage peut être réalisé avec la seule force humaine, éventuellement assistée d'un outil manuel tel qu'un maillet, en appliquant un effort de poussée sur le bloc de formage en direction de la surface de réception. De manière avantageuse, ce montage peut être mis en oeuvre même lorsque le convoyeur est encore chaud, car il ne nécessite pas l'entrée d'une partie du corps de l'opérateur dans le dispositif de chauffage.

De même, le démontage du bloc de formage peut être réalisé aisément depuis l'extérieur du dispositif de chauffage, en faisant passer un outil approprié, tel que la griffe de démontage décrite précédemment, dans l'ouverture latérale du bloc de formage située à l'avant de la surface de réception de la palette. Là encore, le démontage peut être mis en oeuvre même lorsque le convoyeur est encore chaud, puisque l'opérateur agit depuis l'extérieur du dispositif de chauffage. Le bloc de formage, une fois désolidarisé par rapport à la palette, est emmené par le convoyeur vers la sortie du dispositif de chauffage.

Le montage et le démontage des blocs de formage sur les palettes successives d'un convoyeur, préalablement équipées des éléments d'ancrage, peuvent ainsi être effectués en un temps restreint, de l'ordre de trente minutes pour chacun, en faisant tourner le convoyeur à vitesse réduite. Les risques encourus par l'opérateur lors du montage et du démontage des blocs de formage selon l'invention sont très limités par rapport au cas des blocs de formage boulonnés de l'art antérieur. En outre, il y a un important gain de productivité associé à la possibilité de procéder au montage et au démontage des blocs de formage alors que le convoyeur est encore chaud, car on supprime le temps d'attente entre deux productions, sachant que, à titre d'exemple dans le cas où le dispositif de chauffage est une étuve, il faut en général attendre environ 8 heures pour refroidir l'étuve et environ 5 heures pour la remettre en chauffe.

De plus, grâce au maintien élastique assuré par les organes d'encliquetage, la fixation obtenue du bloc de formage sur la palette est fiable et robuste. Il n'est pas possible de perdre un bloc de formage en production car la pression exercée par le produit fibreux du fait de son écrasement provoque l'auto-blocage des organes d'encliquetage. De manière avantageuse, la structure du dispositif de formage selon l'invention permet d'équiper tout type de convoyeur, notamment des convoyeurs déjà en service dans des usines, puisqu'elle peut être adaptée à toute forme de palettes existantes.

Un autre avantage du dispositif de formage selon l'invention est qu'il perturbe très peu la circulation d'air chaud dans le dispositif de chauffage. En effet, seule la partie principale du bloc de formage dépasse de la palette et tous les autres éléments constitutifs du dispositif de formage sont logés dans le volume intérieur de la palette en étant en outre particulièrement compacts pour minimiser les zones d'ombres qui nuisent à la circulation de l'air chaud et donc à l'homogénéité du chauffage. De plus, le dispositif de formage selon l'invention limite les éléments en saillie à l'arrière des palettes. De tels éléments en saillie sont pénalisants car ils sont susceptibles de rompre l'étanchéité à l'arrière des palettes, généralement réalisée à l'aide de joints brosses, ce qui peut poser des problèmes en termes, notamment, d'homogénéité de la température dans le dispositif de chauffage et de qualité de cuisson du produit fibreux.

L'invention n'est pas limitée aux exemples décrits et représentés.

En particulier, le dispositif de formage selon l'invention peut mettre en jeu des organes d'encliquetage autres que des lames-ressorts et des encoches ou des pions d'ancrage. Le nombre et la forme des organes d'encliquetage peuvent également être différents de ceux décrits précédemment. De plus, le dispositif de formage selon l'invention peut être mis en oeuvre dans tout type de dispositif de chauffage, en particulier dans des étuves telles que décrites précédemment, mais également dans des dispositifs de chauffage par micro-ondes ou encore dans des presses de formage chauffantes.

On note également que, même si l'invention a été décrite précédemment pour la fabrication de produits fibreux en fibres de verre, elle est également applicable à la formation de produits fibreux de compositions différentes, d'une nature sensiblement rigide et élastique, notamment comprenant des fibres minérales telles que la laine de roche, la laine minérale ou la laine de laitier, ainsi que les fibres siliceuses apparentées, ou même des fibres organiques qui présentent des caractéristiques suffisantes de rigidité et d'élasticité, telles que les fibres de bois relativement grossières. De plus, même si les produits fibreux à basse densité décrits précédemment sont principalement destinés à être utilisés comme produits d'isolation thermique et/ou acoustique, l'invention est applicable à la fabrication de panneaux, dalles, profilés et autres matériaux destinés à des applications différentes ou combinées, telles que des panneaux décoratifs et des panneaux pour la construction des plafonds, qui peuvent avoir une fonction décorative ou de construction seulement, ou combiner une fonction décorative ou de construction avec une fonction d'isolation thermique et/ou acoustique.

## Revendications

1. Dispositif de formage (7 ; 107) pour créer une forme dans un produit fibreux (15), ce dispositif de formage étant destiné à être monté sur une palette (6; 106) d'un convoyeur (4, 5) de transport du produit fibreux à travers un dispositif de chauffage (2), la palette (6 ; 106) définissant une surface de réception (63 ; 163) du produit fibreux, le dispositif de formage comportant :
- un bloc de formage (8 ; 108), dont une partie principale (81 ; 181) est destinée à être agencée à l'avant de la surface de réception (63 ; 163), et
- au moins un élément d'ancrage (9 ; 199), qui est destiné à être fixé sur la palette en étant agencé à l'arrière de la surface de réception (63 ; 163), **caractérisé en ce que** le bloc de formage (8 ; 108) et l'élément d'ancrage (9 ; 199) comprennent des organes d'encliquetage complémentaires (89, 99 ; 189, 199) qui, lorsque la partie principale (81 ; 181) du bloc de formage est en regard de la surface de réception (63 ; 163) et l'élément d'ancrage (9 ; 199) est fixé sur la palette (6 ; 106) à l'arrière de la surface de réception (63 ; 163), sont aptes à venir en prise par l'application d'un effort unidirectionnel de poussée (F₁) de la partie principale (81 ; 181) du bloc de formage vers la surface de réception (63 ; 163), selon une direction (X) transversale à la surface de réception.

2. Dispositif de formage selon la revendication 1, **caractérisé en ce que** la palette (6 ; 106) définit un volume intérieur à l'arrière de la surface de réception (63; 163), l'élément d'ancrage (9; 199) étant adapté pour être logé dans ce volume intérieur.

3. Dispositif de formage selon l'une quelconque des revendications 1 ou 2, **caractérisé en ce que**, lorsqu'ils sont en prise, les organes d'encliquetage (89, 99 ; 189, 199) assurent un maintien élastique du bloc de formage (8 ; 108) par rapport à l'élément d'ancrage (9 ; 199).

4. Dispositif de formage selon l'une quelconque des revendications précédentes, **caractérisé en ce qu'**au moins l'un des organes d'encliquetage (89, 99 ; 189, 199) est formé par une lame-ressort (98 ; 188).

5. Dispositif de formage selon la revendication 4, **caractérisé en ce que** la lame-ressort (98; 188) est constituée en un alliage métallique pour lequel la variation de la limite élastique est inférieure à 30% en relatif, de préférence inférieure à 20% en relatif, dans le domaine de températures allant de 20°C à 300°C.

6. Dispositif de formage selon l'une quelconque des revendications précédentes, **caractérisé en ce que** l'organe d'encliquetage (99 ; 199) de l'élément d'ancrage (9; 199) comporte une surface d'entrée (S₁), qui forme un point dur pour la mise en prise des organes d'encliquetage (89, 99 ; 189, 199), cette surface d'entrée (S₁) étant inclinée par rapport à la direction de l'effort de poussée (F₁) selon un angle (α₁) inférieur ou égal à 45°, de préférence compris entre 10° et 30°, de manière à permettre le passage du point dur lors de l'application de l'effort de poussée (F₁).

7. Dispositif de formage selon l'une quelconque des revendications précédentes, **caractérisé en ce que** les organes d'encliquetage (89, 99 ; 189, 199) sont aptes à être désassemblés par l'application d'un effort d'éloignement (F₂) du bloc de formage (8 ; 108) par rapport à la surface de réception (63 ; 163) selon une direction (X) transversale à la surface de réception.

8. Dispositif de formage selon la revendication 7, **caractérisé en ce que** l'organe d'encliquetage (99 ; 199) de l'élément d'ancrage (9 ; 199) comporte une surface de rétention (S₂), qui forme un point dur pour le désassemblage des organes d'encliquetage (89, 99 ; 189, 199), cette surface de rétention (S₂) étant inclinée par rapport à la direction de l'effort d'éloignement (F₂) selon un angle (α₂) sensiblement égal à 45° en restant inférieur à 45°, de manière à permettre le passage du point dur lors de l'application de l'effort d'éloignement (F₂).

9. Dispositif de formage selon l'une quelconque des revendications précédentes, **caractérisé en ce que** le bloc de formage (8 ; 108) comporte au moins une ouverture (84) qui, en configuration montée du dispositif de formage sur la palette (6 ; 106), est située à l'avant de la surface de réception (63 ; 163), les organes d'encliquetage (89, 99 ; 189, 199) étant aptes à être désassemblés par l'application, à travers l'ouverture latérale (84), d'un effort d'éloignement (F₂) du bloc de formage (8 ; 108) par rapport à la surface de réception (63 ; 163) selon une direction (X) transversale à la surface de réception.

10. Dispositif de formage selon la revendication 9, **caractérisé en ce qu'**il est destiné à être agencé au voisinage d'un bord latéral (65) de la palette (6 ; 106), avec l'ouverture latérale (84) du bloc de formage (8 ; 108) orientée vers ce bord latéral.

11. Dispositif de formage selon l'une quelconque des revendications précédentes, **caractérisé en ce que** le bloc de formage (8 ; 108) comprend au moins deux organes d'encliquetage (88-89 ; 188-189) en saillie par rapport à sa partie principale (81 ; 181), qui sont aptes à venir en prise chacun avec un organe d'encliquetage (99 ; 199) de l'élément d'ancrage (9 ; 199).

12. Dispositif de formage selon l'une quelconque des revendications précédentes, **caractérisé en ce qu'**il comprend des moyens (110) de blocage en rotation du bloc de formage (8 ; 108) par rapport à l'élément d'ancrage (9 ; 199) ou à la surface de réception (63 ; 163).

13. Dispositif de formage selon l'une quelconque des revendications précédentes, **caractérisé en ce que** la partie principale (81 ; 181) du bloc de formage (8 ; 108) est perforée.

14. Dispositif (1) de fabrication d'un produit fibreux, comprenant :
- un dispositif de chauffage (2),
- un convoyeur inférieur (4) et un convoyeur supérieur (5) qui circulent dans le dispositif de chauffage, chaque convoyeur comprenant une pluralité de palettes (6; 106) définissant chacune une surface de réception (63; 163) du produit fibreux, les convoyeurs inférieur et supérieur étant agencés de manière à comprimer le produit fibreux (15) entre les surfaces de réception lorsqu'ils transportent le produit fibreux à travers le dispositif de chauffage,
**caractérisé en ce qu'**au moins l'un des convoyeurs inférieur (4) et supérieur (5) comporte au moins une palette (6 ; 106) munie d'un dispositif de formage (7 ; 107) selon l'une quelconque des revendications précédentes.

15. Dispositif de fabrication selon la revendication 14, **caractérisé en ce que** le dispositif de formage (7 ; 107) est agencé au voisinage d'un bord latéral du convoyeur.

16. Dispositif de fabrication selon l'une quelconque des revendications 14 ou 15, **caractérisé en ce que** le convoyeur inférieur (4) comporte des dispositifs de formage (7 ; 107) équipant les palettes (6 ; 106) sur un bord des deux convoyeurs (4, 5) en regard, tandis que le convoyeur supérieur (5) comporte des dispositifs de formage (7 ; 107) équipant les palettes (6 ; 106) sur le bord opposé des deux convoyeurs (4, 5) en regard.

## Patentansprüche

1. Formgebungsvorrichtung (7 ; 107) zum Erzeugen einer Form in einem faserigen Produkt (15), wobei diese Formgebungsvorrichtung dazu bestimmt ist, auf einer Palette (6 ; 106) eines Transportbands (4, 5) des faserigen Produkts in einer Heizvorrichtung (2) montiert zu werden, wobei die Palette (6 ; 106) eine Aufnahmefläche (63 ; 163) des faserigen Produkts ausbildet und die Formgebungsvorrichtung Folgendes umfasst:
- eine Formgebungsblock (8 ; 108), dessen Hauptteil (81 ; 181) dazu bestimmt ist, an der Vorderseite der Aufnahmefläche (63 ; 163) angeordnet zu werden und
- wenigstens ein Verankerungselement (9 ; 199), das dazu bestimmt ist, auf der Palette befestigt zu werden und hinten der Aufnahmefläche (63 ; 163) angeordnet zu sein,
**dadurch gekennzeichnet, dass** der Formgebungsblock (8 ; 108) und das Verankerungselement (9 ; 199) ergänzende Einrastelemente (89, 99 ; 189, 199) umfassen, die, wenn der Hauptteil (81 ; 181) des Formgebungsblocks gegenüber der Aufnahmefläche (63 ; 163) ist und das Verankerungselement (9 ; 199) auf der Palette (6 ; 106) hinter der Aufnahmefläche (63 ; 163) befestigt ist, durch die Anwendung einer unidirektionalen Schubkraft (F₁) des Hauptteils (81 ; 181) des Formgebungsblocks in Richtung der Aufnahmefläche (63 ; 163) gemäß einer Querrichtung (X) zu der Aufnahmefläche in Eingriff bringbar sind.

2. Formgebungsvorrichtung nach Anspruch 1, **dadurch gekennzeichnet, dass** die Palette (6 ; 106) ein Innenvolumen hinten der Aufnahmefläche (63 ; 163) ausbildet, wobei das Verankerungselement (9 ; 199) angepasst ist, um in diesem Innenvolumen aufgenommen zu werden.

3. Formgebungsvorrichtung nach einem der Ansprüche 1 oder 2, **dadurch gekennzeichnet, dass**, wenn sie in Eingriff gebracht sind, die Einrastelemente (89, 99 ; 189, 199) ein elastisches Halten des Formgebungsblocks (8 ; 108) im Verhältnis zu dem Verankerungselement (9 ; 199) gewährleisten.

4. Formgebungsvorrichtung nach einem der vorangegangenen Ansprüche, **dadurch gekennzeichnet, dass** mindestens eins der Einrastelemente (89, 99 ; 189, 199) aus einer Sprungfeder (98 ; 188) gebildet wird.

5. Formgebungsvorrichtung nach dem Anspruch 4, **dadurch gekennzeichnet, dass** die Sprungfeder (98 ; 188) aus einer Metalllegierung besteht, für die die Schwankung des elastischen Limits unter 30% relativ, vorzugsweise unter 20% relativ liegt, innerhalb des Temperaturbereichs zwischen 20°C und 300°C.

6. Formgebungsvorrichtung nach einem der vorangegangenen Ansprüche, **dadurch gekennzeichnet, dass** das Einrastelement (99 ; 199) des Verankerungselements (9 ; 199) eine Eingangsfläche (S₁) umfasst, die einen harten Punkt für das Ineingriffbringen der Einrastelemente (89, 99 ; 189, 199) bildet, wobei diese Eingangsfläche (S₁) im Vergleich zu der Richtung der Schubkraft (F₁) geneigt ist, gemäß einem Winkel (α₁), der unter oder gleich 45° beträgt, vorzugsweise zwischen 10° und 30°, sodass das Durchführen des harten Punkts bei der Anwendung der Schubkraft (F₁) möglich ist.

7. Formgebungsvorrichtung nach einem der vorangegangenen Ansprüche, **dadurch gekennzeichnet, dass** die Einrastelemente (89, 99 ; 189, 199) geeignet sind, um mittels Anwendung einer Entfernungskraft (F₂) des Formgebungsblocks (8 ; 108) im Vergleich zu der Aufnahmefläche (63 ; 163) gemäß einer Querrichtung (X) zu der Aufnahmefläche auseinander gebracht zu werden.

8. Formgebungsvorrichtung nach dem Anspruch 7, **dadurch gekennzeichnet, dass** das Einrastelement (99 ; 199) des Verankerungselements (9 ; 199) eine Rückhaltefläche (S₂) umfasst, die einen harten Punkt für das Auseinanderbringen der Einrastelemente (89, 99 ; 189, 199) bildet, wobei diese Rückhaltefläche (S₂) im Vergleich zu der Richtung der Entfernungskraft (F₂) geneigt ist, gemäß einem Winkel (α₂), der im Wesentlichen gleich 45° und unter 45° liegt, sodass das Durchführen des harten Punkts bei der Anwendung der Entfernungskraft (F₂) möglich ist.

9. Formgebungsvorrichtung nach einem der vorangegangenen Ansprüche, **dadurch gekennzeichnet, dass** der Formgebungsblock (8 , 108) wenigstens eine Öffnung (84) umfasst, die bei montierter Konfigurierung der Formgebungsvorrichtung auf der Palette (6 , 106) an der Vorderseite der Aufnahmefläche (63, 163) angeordnet ist, wobei die Einrastelemente (89, 99 ; 189, 199) geeignet sind, um mittels Anwendung durch die seitliche Öffnung (84) einer Entfernungskraft (F₂) des Formgebungsblocks (8 ; 108) im Vergleich zu der Aufnahmefläche (63 ; 163) gemäß einer Querrichtung (X) zu der Aufnahmefläche auseinander gebracht zu werden.

10. Formgebungsvorrichtung nach dem Anspruch 9, **dadurch gekennzeichnet, dass** sie dazu bestimmt ist, in der Nähe einer Seitenkante (65) der Palette (6 ; 106) angeordnet zu werden, wobei die seitliche Öffnung (84) des Formgebungsblocks (8 ; 108) in Richtung dieser Seitenkante orientiert ist.

11. Formgebungsvorrichtung nach einem der vorangegangenen Ansprüche, **dadurch gekennzeichnet, dass** der Formgebungsblock (8 ; 108) wenigstens zwei Einrastelelemente (88-89 ; 188-189) umfasst, die über den Hauptteil (81 ; 181) überstehen, die dazu geeignet sind, jeweils mit einem Einrastelement (99 ; 199) des Verankerungselements (9 ; 199) in Eingriff gebracht zu werden.

12. Formgebungsvorrichtung nach einem der vorangegangenen Ansprüche, **dadurch gekennzeichnet, dass** sie Mittel (110) zur Blockierung in Rotation des Formgebungsblocks (8 ; 108) im Vergleich zu dem Verankerungselement (9 ; 199) oder der Aufnahmefläche (63 ; 163) umfasst.

13. Formgebungsvorrichtung nach einem der vorangegangenen Ansprüche, **dadurch gekennzeichnet, dass** der Hauptteil (81 ; 181) des Formgebungsblocks (8 ; 108) perforiert ist.

14. Herstellungsvorrichtung (1) zur Herstellung eines faserigen Produkts, die Folgendes umfasst:
- eine Heizvorrichtung (2),
- ein unteres Transportband (4) und ein oberes Transportband (5), die in der Heizvorrichtung laufen, wobei jedes Transportband mehrere Paletten (6 ; 106) umfasst, die jeweils eine Aufnahmefläche (63 ; 163) des faserigen Produkts ausbilden, und das untere und das obere Transportband so angeordnet sind, dass sie das faserige Produkt (15) zwischen den Aufnahmeflächen komprimieren, wenn sie das faserige Produkt durch die Heizvorrichtung transportieren,
**dadurch gekennzeichnet, dass** wenigstens eines des unteren (4) und oberen (5) Transportbands mindestens eine Palette (6 ; 106) umfasst, ausgestattet mit einer Formgebungsvorrichtung (7 ; 107) nach einem der vorangegangenen Ansprüche.

15. Herstellungsvorrichtung nach dem Anspruch 14, **dadurch gekennzeichnet, dass** die Formgebungsvorrichtung (7 ; 107) in der Nähe einer Seitenkante des Transportbands angeordnet ist.

16. Herstellungsvorrichtung nach dem Anspruch 14 oder 15, **dadurch gekennzeichnet, dass** das untere Transportband (4) Formgebungsvorrichtungen (7 ; 107) umfasst, die die Paletten (6 ; 106) auf einer Kante der zwei gegenüber liegenden Transportbänder (4, 5) ausstatten, während das obere Transportband (5) Formgebungsvorrichtungen (7 ; 107) umfasst, die die Paletten (6 ; 106) auf der gegenüberliegenden Kante der zwei gegenüber liegenden Transportbänder (4, 5) aussttatten.

## Claims

1. Forming device (7; 107) for creating a form in a fibrous product (15), this forming device being intended to be mounted on a flight (6; 106) of a conveyor (4, 5) for transporting the fibrous product through a heating device (2), the flight (6; 106) defining a receiving surface (63; 163) for the fibrous product, the forming device having:
- a forming block (8; 108), a main part (81; 181) of which is intended to be arranged at the front of the receiving surface (63; 163), and
- at least one anchoring element (9; 199) which is intended to be fixed to the flight while being arranged at the rear of the receiving surface (63; 163),
**characterized in that** the forming block (8; 108) and the anchoring element (9; 199) comprise complementary snap-fastening members (89, 99; 189, 199) which, when the main part (81; 181) of the forming block is facing the receiving surface (63; 163) and the anchoring element (9; 199) is fixed to the flight (6; 106) at the rear of the receiving surface (63; 163), are able to engage by the application of a one-way pushing force (F₁) that pushes the main part (81; 181) of the forming block towards the receiving surface (63; 163), in a transverse direction (X) with respect to the receiving surface.

2. Forming device according to Claim 1, **characterized in that** the flight (6; 106) defines an internal volume at the rear of the receiving surface (63; 163), the anchoring element (9; 199) being designed to be housed in this internal volume.

3. Forming device according to either of Claims 1 and 2, **characterized in that**, when they are engaged, the snap-fastening members (89, 99; 189, 199) elastically retain the forming block (8; 108) with respect to the anchoring element (9; 199).

4. Forming device according to any one of the preceding claims, **characterized in that** at least one of the snap-fastening members (89, 99; 189, 199) is formed by a leaf spring (98; 188).

5. Forming device according to Claim 4, **characterized in that** the leaf spring (98; 188) is made from a metal alloy for which the variation in the elastic limit is less than 30% in relative terms, preferably less than 20% in relative terms, in the range of temperatures from 20°C to 300°C.

6. Forming device according to any one of the preceding claims, **characterized in that** the snap-fastening member (99; 199) of the anchoring element (9; 199) has an entry surface (S₁) which forms a hard point for the engagement of the snap-fastening members (89, 99; 199, 199), this entry surface (S₁) being inclined with respect to the direction of the pushing force (F₁) at an angle (α₁) of less than or equal to 45°, preferably between 10° and 30°, so as to allow the passage of the hard point during the application of the pushing force (F₁).

7. Forming device according to any one of the preceding claims, **characterized in that** the snap-fastening members (89, 99; 189, 199) are able to be disassembled by the application of a separating force (F₂) for separating the forming block (8; 108) from the receiving surface (63; 163), in a transverse direction (X) with respect to the receiving surface.

8. Forming device according to Claim 7, **characterized in that** the snap-fastening member (99; 199) of the anchoring element (9; 199) has a retaining surface (S₂) which forms a hard point for the disassembly of the snap-fastening members (89, 99; 189, 199), this retaining surface (S₂) being inclined with respect to the direction of the separating force (F₂) at an angle (α₂) of approximately equal to 45°, remaining less than 45°, so as to allow the passage of the hard point during the application of the separating force (F₂).

9. Forming device according to any one of the preceding claims, **characterized in that** the forming block (8; 108) has at least one opening (84) which, in the configuration in which the forming device is mounted on the flight (6; 106), is located at the front of the receiving surface (63; 163), the snap-fastening members (89, 99; 189, 199) being able to be disassembled by the application, through the lateral opening (84), of a separating force (F₂) for separating the forming block (8; 108) from the receiving surface (63; 163) in a transverse direction (X) with respect to the receiving surface.

10. Forming device according to Claim 9, **characterized in that** it is intended to be arranged in the vicinity of a lateral edge (65) of the flight (6; 106), with the lateral opening (84) in the forming block (8; 108) being oriented towards this lateral edge.

11. Forming device according to any one of the preceding claims, **characterized in that** the forming block (8; 108) comprises at least two snap-fastening members (88-89; 188-189) projecting from its main part (81; 181), said snap-fastening members (88-89; 188-189) each being able to engage with a snap-fastening member (99; 199) of the anchoring element (9; 199).

12. Forming device according to any one of the preceding claims, **characterized in that** it comprises means (110) for preventing the forming block (8; 108) from rotating with respect to the anchoring element (9; 199) or with respect to the receiving surface (63; 163).

13. Forming device according to any one of the preceding claims, **characterized in that** the main part (81; 181) of the forming block (8; 108) is perforated.

14. Device (1) for manufacturing a fibrous product, comprising:
- a heating device (2),
- a lower conveyor (4) and an upper conveyor (5) which circulate in the heating device, each conveyor comprising a plurality of flights (6; 106) that each define a receiving surface (63; 163) for the fibrous product, the lower and upper conveyors being arranged so as to compress the fibrous product (15) between the receiving surfaces when they transport the fibrous product through the heating device,
**characterized in that** at least one of the lower conveyor (4) and upper conveyor (5) has at least one flight (6; 106) that is provided with a forming device (7; 107) according to any one of the preceding claims.

15. Manufacturing device according to Claim 14, **characterized in that** the forming device (7; 107) is arranged in the vicinity of a lateral edge of the conveyor.

16. Manufacturing device according to either of Claims 14 and 15, **characterized in that** the lower conveyor (4) has forming devices (7; 107) that equip the flights (6; 106) on one edge of the two facing conveyors (4, 5), while the upper conveyor (5) has forming devices (7; 107) that equip the flights (6; 106) on the opposite edge of the two facing conveyors (4, 5).
